Europäisches Patentamt

European Patent Office

Office européen des brevets

(19)

Publication number: **0 272 655**

**A2**

# EUROPEAN PATENT APPLICATION

(21) Application number: **87118869.4**

(22) Date of filing: **18.12.87**

(51) Int. Cl.⁴: **G06F 1/02 , G06F 15/353**

(30) Priority: **23.12.86 JP 315186/86**

(43) Date of publication of application:
**29.06.88 Bulletin 88/26**

(84) Designated Contracting States:
**DE FR GB**

(71) Applicant: **DAINIPPON SCREEN MFG., CO., LTD.**
1-1, Tenjinkitacho
Horikawadoriteranouchiagaru-4-chome
Kamikyo-ku Kyoto-shi Kyoto-fu(JP)

(72) Inventor: **Akiyama, Kazuya c/o Dainippon Screen Mfg. Co., Ltd**
1-1, Tenjinkitamachi Teranouchi-Agaru
4-chome
Horikawa Dori Kamikyo-ku Kyoto(JP)

(74) Representative: **Goddar, Heinz J., Dr. et al**
**FORRESTER & BOEHMERT**
Widenmayerstrasse 4/I
D-8000 München 22(DE)

(54) Method and apparatus for generating look-up table data.

(57) Basic data elements obtained by thinning-out data to be written in a look-up table (1) are calculated by a computer (7) and stored in a basic memory table (9). Coefficient data elements required for linearly interpolating the basic data elements are stored in a coefficient memory table (11). The basic data elements and correlated the coefficient data elements are read in accordance with address designation by an address generator (10) and subjected to interpolation operation by an interpolation computing element (8), and the data thus obtained are sequentially written in the look-up table (1).

FIG. 1

EP 0 272 655 A2

## "Method of and apparatus for generating look-up table data"

THE PRESENT INVENTION relates to a method of and an apparatus for quickly and efficiently generating data to be written in a look-up table.

In a known electronic process scanner characteristics of an output image such as colour tones, contrast etc. set by an operator can be confirmed by the operator on a colour monitor in advance of actual scanning. When a look-up table is employed in a colour operating section of such an electronic process scanner, the look-up table previously stores results obtained by performing colour compensation operations on all the input image data in accordance with prescribed colour compensation calculating expressions. Colour-compensated image data is immediately read out by the look-up table, without sequentially performing a colour compensation operation on the input image data obtained by input scanning, to be displayed on the colour monitor. The look-up table may store selected discrete input image data elements, so that the data read from the look-up table is interpolated to obtain the results of the colour compensation operation with respect to all the input image data. Since constants in the colour compensation calculating expressions are varied with image processing conditions, the operation must be repeated to update the look-up table data when the operator changes the image processing conditions. However, since calculating expressions for colour compensation are extremely complicated, a relatively long time, for example, several seconds, has been required for such updating. Thus, the operator must accept a waiting time of several seconds before the display on the colour monitor is changed every time he sets a new image processing condition. Thus, a considerable time has been required to attain a desired output image by repeatedly changing the image processing condition while observing the appearance of the output image on the colour monitor.

The present invention aims to provide a method of and an apparatus for quickly and efficiently generating data to be written in a look-up table.

According to the present invention, basic data selected at regular intervals from data to be written in a look-up table is previously calculated and stored, coefficient data required for linearly interpolating the basic data is also previously stored, and the interpolation operation is performed in an interpolation computing element by reading the basic data and correlated coefficient data, the data thus obtained being sequentially written in the look-up table.

Thus, according to the present invention, look-up table data obtained by actual processing of input data in accordance with colour compensation calculating expressions is constituted only by basic data and the remaining look-up table data is generated by linear interpolation by an interpolation computing element, thereby reducing the time for generating the look-up table data as a whole.

In order that the invention may be readily understood, embodiments thereof will now be described, by way of example, with reference to the accompanying drawings, in which:

Figure 1 is a block diagram showing a first embodiment of the present invention;

Figure 2 is illustrative of address assignment of basic data;

Figure 3 is illustrative of address assignment of coefficient data;

Figure 4 is a timing chart showing the operation of the embodiment shown in Figure 1;

Figure 5 illustrates an exemplary address generator;

Figure 6 is a block diagram showing a second embodiment of the present invention;

Figure 7 is a conceptual diagram showing a look-up table having a three-dimensional address space;

Figure 8 is a conceptual diagram showing a block formed by a set of basic data elements; and

Figure 9 is a timing chart showing the operation of the embodiment shown in Figure 6.

### (A) First Embodiment

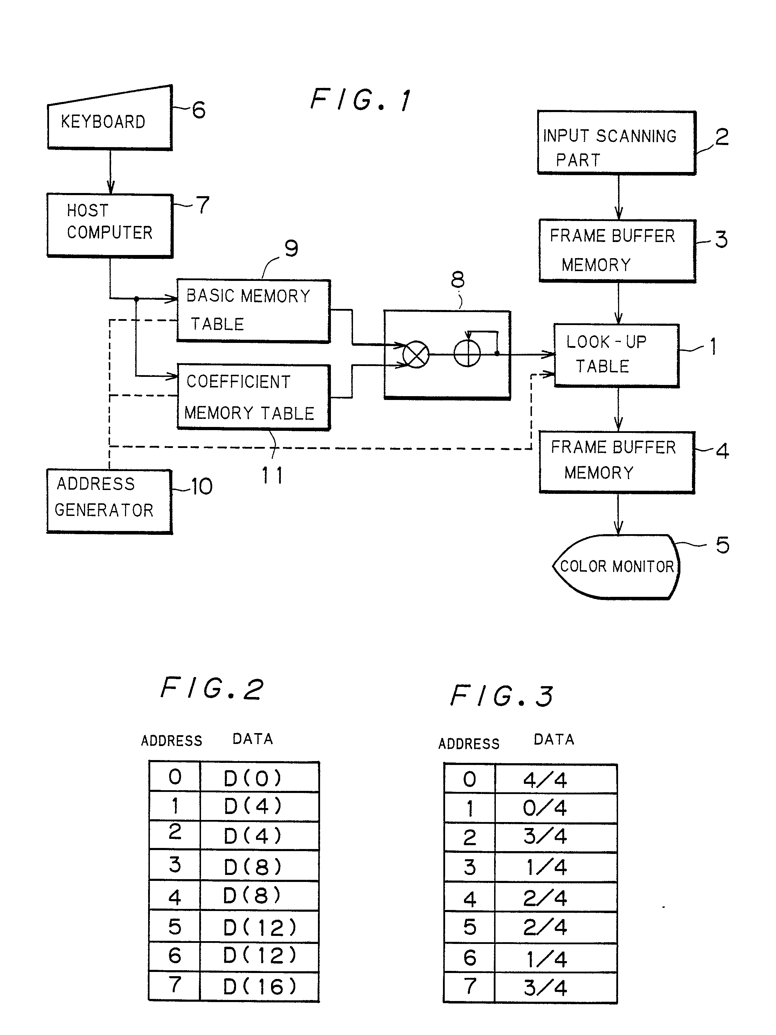

Figure 1 is a block diagram schematically showing the structure of a first embodiment of the present invention. Referring to Figure 1, a look-up table 1 stores results obtained by performing an operation for colour compensation on all input image data in accordance with prescribed colour compensation calculating expressions. An input scanning part 2 of e.g. a process scanner to which the present invention is applied, photoelectrically scans a colour original (not shown) to obtain colour-separated input image data representing the variable colour density of the original. The input image data is temporarily stored in a frame buffer memory 3 of an input section, and sequentially read out to be immediately converted into colour-compensated image data by the look-up table 1 without being subjected to colour compensation calculation, and again temporarily stored in a frame buffer memory 4 of an output section.

In the setting of an image processing condition, the colour-compensated image data temporarily stored in the frame buffer memory 4 is displayed on a colour monitor 5 as a simulation of a printed image that may result from the data, whereby an operator can confirm whether or not a desired output image is obtained by the image processing condition set by him. After the desired image processing condition is completely set, the contents of the frame buffer memory 4 are supplied to an output scanning part (not shown), so that exposure scanning to obtain a plate for each separation colour is performed on a photosensitive material such as a film.

The image processing condition is set using a keyboard 6. Upon such setting, in a conventional system, a host computer 7 processes all of the data to be stored in the look-up table 1 in accordance with prescribed colour compensation calculating expressions, so that a relatively long time is required for such operation as hereinabove described. In order to reduce the time for generating such look-up table data, the host computer 7 in the present invention is adapted to process, in accordance with colour compensation calculating expressions, only basic data elements obtained by selectively sampling the look-up table data at prescribed intervals. The remaining look-up table data is generated through linear interpolation by a multiplier/accumulator 8 which performs the required interpolation operation.

On the assumption that the look-up table 1 is a one-dimensional table of four-bit addresses, an exemplary procedure for writing data into the look-up table 1 is as follows:

(1) First, the operator sets an image processing condition through the keyboard 6.

(2) The host computer 7 processes basic data in accordance with colour compensation calculating expressions dependent upon the set image processing condition. The number of data elements in the look-up table is $2^4 = 16$ (denoted by D(0) to D(15), and elements D(0), D(4), D(8), D(12) and D(16) are selected as the basic data elements. The data element D(16) is included because the same is required, in addition to D(12), in order to obtain D(13) to D(15) through an interpolation calculation.

(3) The basic data elements thus obtained are written in a basic memory table 9 in a duplicated manner, as shown in the memory map of Figure 2. Such duplicated address assignment is adapted to facilitate address generation by an address generator 10, as hereinafter described.

(4) Coefficients required for the interpolation calculation are previously written in a coefficient memory table 11 in the sequence required for the calculation, as shown in the memory map of Figure 3. Since these coefficients do not vary, the coefficient memory table 11 may be constituted by a RAM in which the coefficients are previously written at the start of generation or a ROM in which the coefficients have already been written elsewhere.

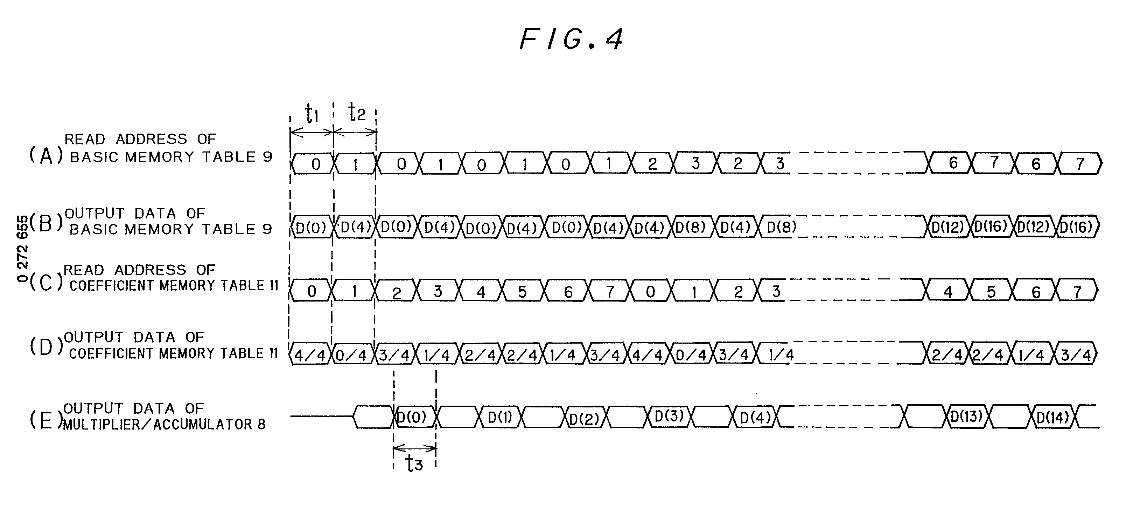

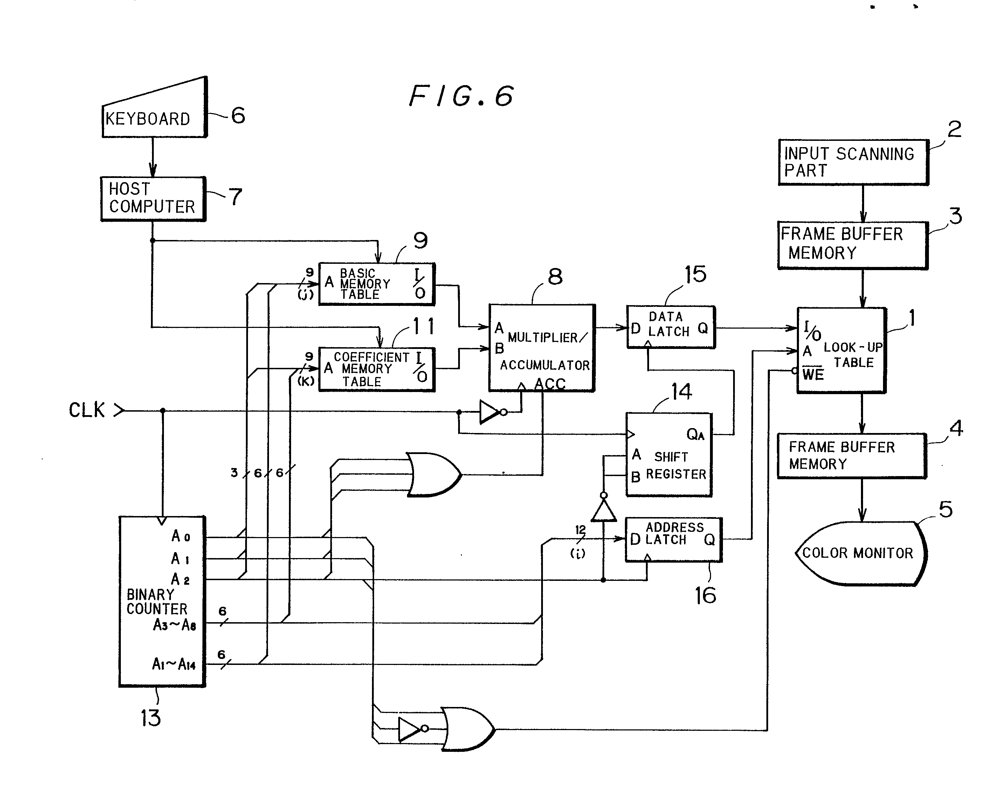

(5) The basic and coefficient data are sequentially read from the basic and coefficient memory tables 9 and 11 in accordance with addresses generated by the address generator 10 as shown in Figure 4, to perform the interpolation operation in the multiplier/accumulator 8. Interpolation operation expressions for obtaining all of the look-up table data elements D(0) to D(15) from the five basic data elements D(0), D(4), D(8), D(12) and D(16) are as follows:

$$D(0) = D(0) \times 4/4 + D(4) \times 0/4 \qquad \ldots(1a)$$
$$D(1) = D(0) \times 3/4 + D(4) \times 1/4 \qquad \ldots(1b)$$
$$D(2) = D(0) \times 2/4 + D(4) \times 2/4 \qquad \ldots(1c)$$
$$D(3) = D(0) \times 1/4 + D(4) \times 3/4 \qquad \ldots(1d)$$
$$D(4) = D(4) \times 4/4 + D(8) \times 0/4 \qquad \ldots(1e)$$
$$D(5) = D(4) \times 3/4 + D(8) \times 1/4 \qquad \ldots(1f)$$
$$\ldots \qquad \ldots \qquad \ldots \qquad \ldots$$
$$D(15) = D(12) \times 1/4 + D(16) \times 3/4 \qquad \ldots(1p)$$

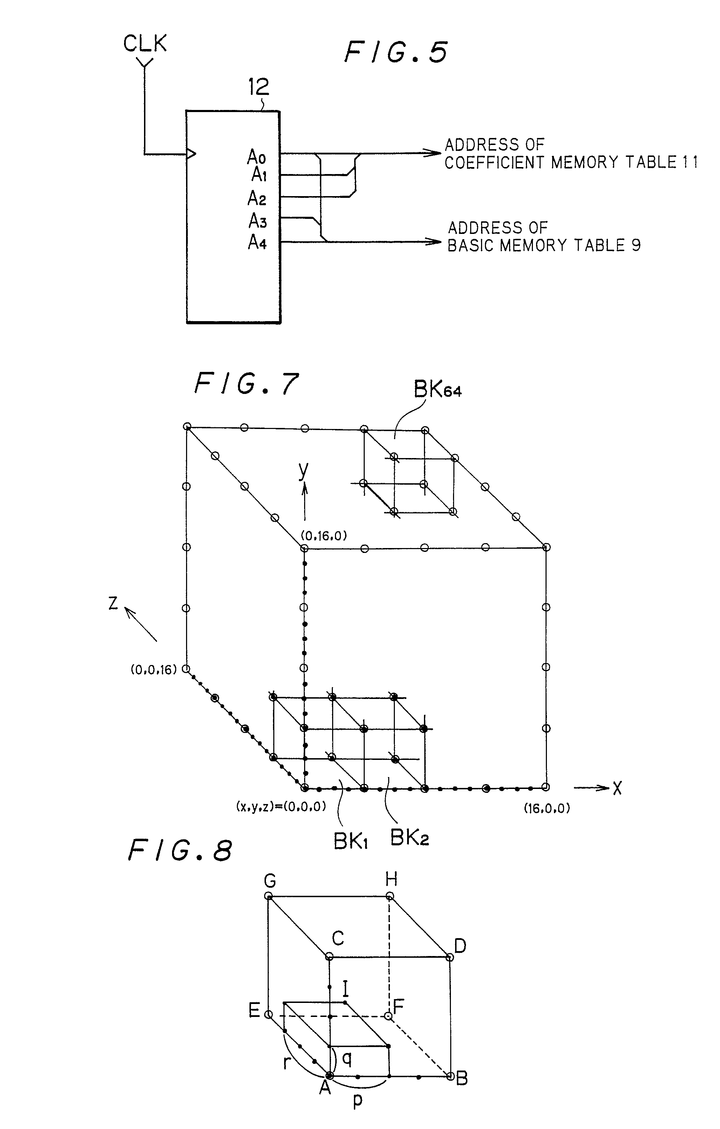

For example, the first and second terms of the above expression (1a) are calculated at respective times $t_1$ and $t_2$ of Figure 4 so that the result of accumulating these terms is output as the data element D(0) from the multiplier/accumulator 8 at a time $t_3$. Output of the data element D(0) is retarded by a delay through the multiplier/accumulator 8. Data under operation (the first terms of the expressions (1a) to (1p) in this case) are output in null ouput periods of the multiplier/accumulator 8 in Figure 4. In this embodiment, read addresses for the basic and coefficient memory tables 9 and 11 can be readily obtained by employing or appropriately combining respective outputs $A_0$ to $A_4$ ($A_0$: the least significant digit bit) of a binary counter 12 shown in Figure 5.

(6) The look-up table data elements D(0), D(1), ... D(15) generated in the above manner are sequentially

3

written into the look-up table 1 in accordance with the addresses generated by the address generator 10, to complete updating of the look-up table data in accordance with the image processing condition described in item (1). Processing timing will be described in detail with reference to the second embodiment shown in Figure 6.

## (B) Second Embodiment

Figure 6 is a block diagram showing a second embodiment of the present invention. With reference to this embodiment, a description will now be given of a method of obtaining by interpolation the data of a look-up table 1 having a three-dimensional address space with four-bit addresses per dimension from selected basic data thinned-out to two-bit addresses per dimension through interpolation.

The look-up table 1 is a three-dimensional table having $2^4$ = 16 addresses per dimension, and hence the same can be conceptually represented in the form of a cube as shown in Figure 7. Assuming that x, y and z (integers from 0 to 15) represent addresses of respective dimensions, any address i of the look-up table 1 can be generally expressed as follows:

$$i = x \times 2^0 + y \times 2^4 + z \times 2^8 \quad ...(2)$$

Assuming that L(i) represents the data element addressed by the address i, data elements L(i) of sixteen per dimension, i.e. $16^3$ = 4096 in total (i: integers from 0 to 4095) are arranged in the form of a lattice as shown by black points in figure 7, to form the look-up table 1.

In order to obtain the data elements L(i) through interpolation, five basic data elements per dimension, i.e., 125 data elements in total, are selected as shown by the white circles in Figure 7. Arbitrary data element L(i) is obtained by interpolating the eight basic data elements enclosing the data element L(i) in Figure 7. That is, the cube shown in Figure 7 is divided into 64 blocks BK· to $BK_{64}$, each of which is formed by a cube enclosed by eight basic data elements, and each block is interpolated to $4^3$ = 64 data elements, thereby to obtain 64 x 64 = 4096 data elements in total.

Referring to Figure 8 which shows a block including a data element L(i) to be obtained, the data element L(i) in a position I is derived from eight basic data elements B(A) to B(H) in positions A to H and distances p, q and r (integers from 0 to 3) in directions x, y and z between the points I and A, in accordance with the following expression:

$$
\begin{aligned}
L(i) = \ &B(A) \times (4 - p) \times (4 - q) \times (4 - r) \times 1/64 \\
+ \ &B(B) \times \quad p \quad \times (4 - q) \times (4 - r) \times 1/64 \\
+ \ &B(C) \times (4 - p) \times \quad q \quad \times (4 - r) \times 1/64 \\
+ \ &B(D) \times \quad p \quad \times \quad q \quad \times (4 - r) \times 1/64 \\
+ \ &B(E) \times (4 - p) \times (4 - q) \times \quad r \quad \times 1/64 \\
+ \ &B(F) \times \quad p \quad \times (4 - q) \times \quad r \quad \times 1/64 \\
+ \ &B(G) \times (4 - p) \times \quad q \quad \times \quad r \quad \times 1/64 \\
+ \ &B(H) \times \quad p \quad \times \quad q \quad \times \quad r \quad \times 1/64 \\
= \ &B(A) \times C(A) + B(B) \times C(B) + B(C) \times C(C) \\
+ \ &B(D) \times C(D) + B(E) \times C(E) + B(F) \times C(F) \\
+ \ &B(G) \times C(G) + B(H) \times C(H)
\end{aligned}
$$

$$...(3)$$

Within the expression (3), B(A) to B(H) are eight data elements out of the 125 basic data elements, which eight elements are decided when the block to which L(i) belongs is recognized. Further, eight coefficient data elements C(A) to C(H) are decided when the position of L(i) in the block is recognized, and are common to all blocks.

It is simpler to derive interpolated data block by block by executing the interpolation operation defined by the expression (3) for each of blocks $BK_1$ to $BK_{64}$ than to drive the interpolated data by executing the interpolation operation from L(0) to L(4095) in accordance with the sequence of the addresses in the look-up table. Therefore, the following description is made with respect to a method of most efficiently packing the basic and coefficient data (method of data address assignment in a redundant manner) in which interpolation data is obtained block by block and a method of generating read addresses for the basic coefficient memory tables 9 and 11 for interpolation and write addresses of the look-up table 1.

## (B-1) Packing Method for Basic Data

Eight basic data elements for each block are treated as a set of basic data elements. The 125 basic data elements are redundantly packed as $8 \times 64 = 512$ data elements in total because there are 64 blocks (sets), and different addresses are assigned respectively to store the same in a basic memory table 9. Assuming that, in general, $B(x_1, y_1, z_1)$ represents a basic data element in the location $(x, y, z) = (x_1, y_1, z_1)$ and $B(j)$ represents a data element having address $j$ ($j$: integer from 0 to 511) in the basic memory table, the sets of basic data elements are packed as follows:

$$B(8n) = B(4R_4(n), 4(Q_4(n) - 4Q_{16}(n)), 4Q_{16}(n))$$
$$\dots (4a)$$

$$B(8n+1) = B(4R_4(n) + 4, 4(Q_4(n) - 4Q_{16}(n)), 4Q_{16}(n))$$
$$\dots (4b)$$

$$B(8n+2) = B(4R_4(n), 4(Q_4(n) - 4Q_{16}(n)) + 4, 4Q_{16}(n))$$
$$\dots (4c)$$

$$B(8n+3) = B(4R_4(n) + 4, 4(Q_4(n) - 4Q_{16}(n)) + 4, 4Q_{16}(n))$$
$$\dots (4d)$$

$$B(8n+4) = B(4R_4(n), 4(Q_4(n) - 4Q_{16}(n)), 4Q_{16}(n) + 4)$$
$$\dots (4e)$$

$$B(8n+5) = B(4R_4(n) + 4, 4(Q_4(n) - 4Q_{16}(n)), 4Q_{16}(n) + 4)$$
$$\dots (4f)$$

$$B(8n+6) = B(4R_4(n), 4(Q_4(n) - 4Q_{16}(n)) + 4, 4Q_{16}(n) + 4)$$
$$\dots (4g)$$

$$B(8n+7) = B(4R_4(n) + 4, 4(Q_4(n) - 4Q_{16}(n)) + 4, 4Q_{16}(n) + 4)$$
$$\dots (4h)$$

In the above expressions, $n$ ($n$: integer from 0 to 63) represents the block numbers, $Q_4(n)$ represents the quotients obtained by dividing $n$ by 4 and $R_4(n)$ represents the remainders. Briefly stated, the eight data elements forming each of the 64 blocks $BK_1$, $BK_2$, ..., $BK_{64}$ in Figure 7 are arranged in a sequence of A to H in each block (Figure 8) and along the sequence of block numbers to be stored in the basic memory table 9 under assignment of different addresses of 0 to 511.

## (B-2) Packing Method for Coefficient Data

The eight coefficient data elements C(A) to C(H) for each L(i) represented by the expression (3) are treated as a set of coefficient data. The coefficient data of $8 \times 4^3 = 512$ elements belongs to each block because there are $4^3$ of L(i) in one block. Since these are common to respective blocks, the coefficient data elements are packed as 512 data elements in total to be written in the coefficient memory table 11 under assignment of different addresses in the sequence required for calculation. When, in general, the point A is at location $(x, y, z) = (x_1, y_1, z_1)$ in Figure 8, the point I is in a position of $(x, y, z) = (x_1+p, y_1+q, z_1+r)$ (p, q, r: integers from 0 to 3). Assuming that $C(k)$ represents data of address $k$ ($k$: integer from 0 to 511) in the coefficient memory table 11, the sets of coefficient data are packed as follows:

$$C(8p + 32q + 128r) = (4-p) \text{ x } (4-q) \text{ x } (4-r) \text{ x } 1/64 \qquad \ldots(5a)$$

$$C(8p + 32q + 128r = 1) = p \text{ x } (4-q) \text{ x } (4-r) \text{ x } 1/64 \qquad \ldots(5b)$$

$$C)8p + 32q + 128r + 2) = (4-p) \text{ x } q \text{ x } (4-r) \text{ x } 1/64 \qquad \ldots(5c)$$

$$C(8p + 32q + 128r + 3) = p \text{ x } q \text{ x } (4-r) \text{ x } 1/64 \qquad \ldots 5d)$$

$$C(8p + 32q + 128r + 4) = (4-p) \text{ x } (4-q) \text{ x } r \text{ x } 1/64 \qquad \ldots(5e)$$

$$C(8p + 32q + 128r + 5) = p \text{ x } (4-q) \text{ x } r \text{ x } 1/64 \qquad \ldots(5f)$$

$$C(8p + 32q + 128r + 6) = (4-p) \text{ x } q \text{ x } r \text{ x } 1/64 \qquad \ldots(5g)$$

$$C(8p + 32q + 128r + 7) = p \text{ x } q \text{ x } r \text{ x } 1/64 \qquad \ldots(5h)$$

(B-3) Address Generation Method

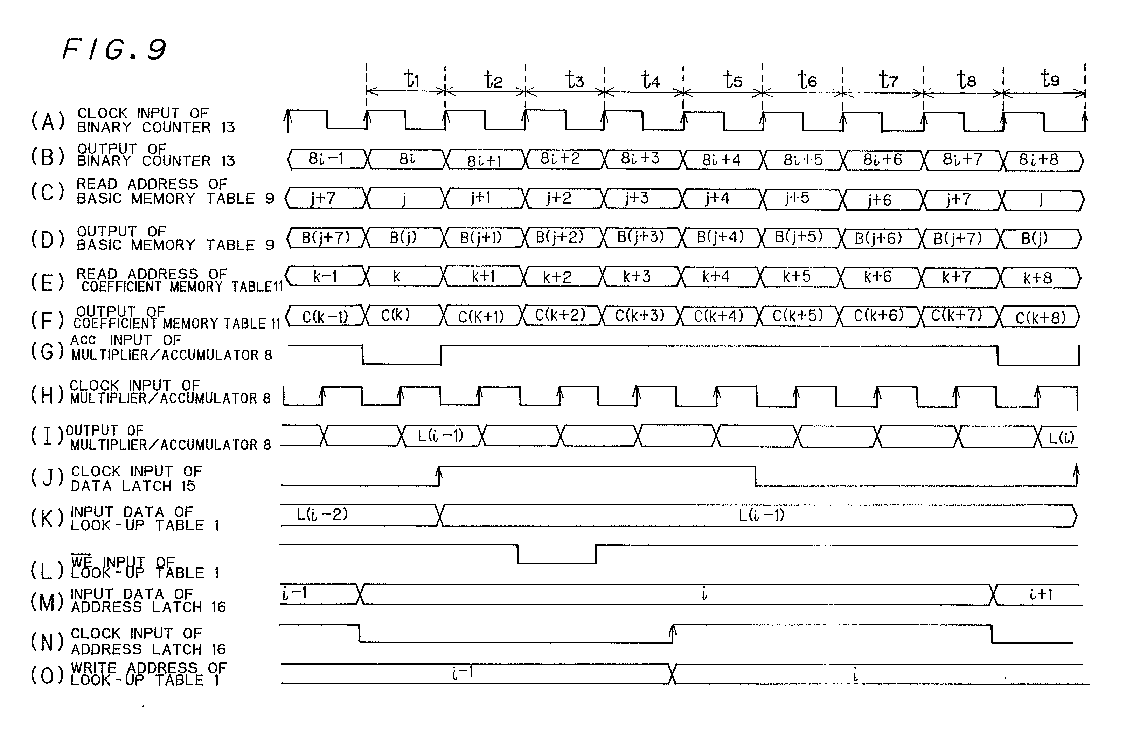

Description is now made of a method of generating read addressed for the basic and coefficient memory table 9 and 11 and write addresses for the look-up table 1 for performing interpolation with the timing shown in Figure 9 and with the basic and coefficient data elements stored in the basic coefficient memory tables 9 and 11 of Figure 6 in accordance with the aforementioned packing methods. In this embodiment, a 15-bit binary counter 13 is employed as an address generator.

Assuming that $i$ and $L(i)$ represent the write addresses of the look-up table 1 and the data elements thereof respectively, $j$ and $B(j)$ represent the read addresses of the basic memory table 9 and the basic data elements thereof and $k$ and $C(k)$ represent the read addresses of the coefficient memory table 11 and the coefficient data elements thereof respectively, the above expression (3) may be written as follows:

$$\begin{aligned} L(i) = {} & B(j) \text{ x } C(k) + B(j + 1) \text{ x } C(k + 1) \\ & + B(j + 2) \text{ x } C(k + 2) + B(j + 3) \text{ x } C(k + 3) \\ & + B(j + 4) \text{ x } C(k + 4) + B(j + 5) \text{ x } C(k + 5) \\ & + B(j + 6) \text{ x } C(k + 6) + B(j + 7) \text{ x } C(k + 7) \\ & \qquad\qquad \ldots(6) \end{aligned}$$

The individual terms of the above expression (6) are calculated in a multiplier/accumulator 8 at respective times $t_1$ to $t_8$ in Figure 9, and the result of accumulation thereof is output as the data $L(i)$ from the multiplier/accumulator 8 at a time $t_9$ immediately after the time $t_8$, as shown at Figure 9(I). As shown at Figure 9(H), the multiplier/accumulator 8 performs its multiplying/accumulating operation in synchronization with clock signals obtained by inverting clock signals from the binary counter 13 at Figure 9(A), and its ACC input receives a control signal which goes low for each time a look-up table data element L(i) is generated as shown at Figure 9(G), so that the content of accumulation is cleared each timne. The multiplier accumulator 8 may be in the form of a TMC2210 by TRW Inc., for example.

In the embodiment shown in Figure 6, the relationship between the outputs $A_0$ to $A_{14}$ ($A_0$: least significant digit bit) and the write addresses i of the look-up table 1 as well as the read addresses j and k of the basic and coefficient memory tables 9 and 11 is as follows:

$$i = A_{14} \times 2^{11} + A_{13} \times 2^{10} + A_{10} \times 2^9 + A_9 \times 2^8 + A_6 \times 2^7$$
$$+ A_5 \times 2^6 + A_{12} \times 2^5 + A_{11} \times 2^4 + A_8 \times 2^3 + A_7 \times 2^2$$
$$+ A_4 \times 2^1 + A_3 \times 2^0$$

$$\ldots (7a)$$

$$j = A_{14} \times 2^8 + A_{13} \times 2^7 + A_{12} \times 2^6 + A_{11} \times 2^5 + A_{10} \times 2^4$$
$$+ A_9 \times 2^3 + A_2 \times 2^2 + A_1 \times 2^1 + A_0 \times 2^0$$

$$\ldots (7b)$$

$$k = A_8 \times 2^8 + A_7 \times 2^7 + A_6 \times 2^6 + A_5 \times 2^5 + A_4 \times 2^4$$
$$+ A_3 \times 2^3 + A_2 \times 2^2 + A_1 \times 2^1 + A_0 \times 2^0$$

$$\ldots (7c)$$

Generation of the read addresses is thus simplified by packing the basic and coefficient data by the aforementioned packing method to assign the addresses.

Referring to Figure 6, a shift register 14 derives the data latch clock signal of Figure 9 (J) by inverting the output $A_2$ of the binary counter 13 and shifting the same by one clock pulse, and a data latch 15 latches the look-up table data element L(i) output from the multiplier/accumulator 8 in synchronization with the data latch clock signal, as shown at Figure 9 (K). An address latch 16 is a latch for latching the write addresses of the look-up table 1 output from the binary counter 13 in order to attain synchronization with the look-up table data output from the data latch 15, by receiving the output $A_2$ of the binary counter 13 as the clock input signal shown at Figure 9 (N) to latch the address data 1 of Figure 9(M) in synchronization with the same. Thus, the look-up table 1 is supplied with the look-up table data of Figure 9(K) and the address data of Figure 9(O) in synchronization, to perform data storage in response to the fall of a write control signal WE shown at Figure 9(L).

### (C) Extension of Data Packing Method

The aforementioned data packing method is generally applicable to a look-up table 1 having a b-dimensional address space formed by a-bits per dimension and a basic memory table 9 having a b-dimensional address space formed by a c-bits per dimension, where a, b and c represent natural numbers of $1 \leq c < a$.

In this case, the number of basic data elements is $2^c + 1$ per dimension, and $(2^c + 1)^b$ in total in b dimensions. A set of basic data elements is formed by $2^b$ basic data elements which mutually adjoin in each dimension. The basic data elements are packed as $2^b \times (2^c)^b$ data elements in total because there are $(2^c)^b$ sets, to be stored in the basic memory table 9 under assignment of different addresses of $2^b \times (2^c)^b$. The basic data elements of one set are interpolated to become $(2^{a-c})^b$ data elements in order to obtain $(2^c)^b \times (2^{a-c})^b = (2^a)^b$ data elements in total.

On the other hand, a set of coefficient data elements is formed by $2^b$ coefficient data elements which are required for calculation of a single interpolation data element. The coefficient data elements are packed as $2^b \times (2^{a-c})^b$ data elements in total because there are $(2^{a-c})^b$ sets which are equal in number to interpolation data elements derived from a set of basic data elements to be stored in the coefficient memory table 11 under assignment of different address of $2^b \times (2^{a-c})^b$.

In the interpolation operation, the read addresses of the basic and coefficient memory tables 9 and 11 are generated by the binary counter 13 so that each set of basic data elements is read repeatedly $(2^{a-c})^b$ times and different sets of coefficient data elements are correspondingly read with respect to the repeated respective sets, while the write addresses of the look-up table 1 are generated by the binary counter 13 so that different write addresses are sequentially designated for every reading of a set of basic and coefficient data.

### (D) Calculating Time

Assuming that the look-up table 1 is a table having a b-dimensional address space formed by a-bit addresses per dimension and the basic memory table 9 is a table having a b-dimensional address space formed by c-bit addresses per dimension.

number of look-up table data elements $= (2^a)^b$ ...(8a)

number of basic data elements $= (2^c + 1)^b$ ...(8b)

Assuming that L (i), B(j) and C(k) represent data elements of the look-up table 1 and the basic coefficient memory tables 9 and 11 in the case that addresses thereof are i, j and k, respectively. L(i) can be obtained by the following expression, where $\alpha$ represents an integer of from 0 to $(2^b -1)$.

$$L(i) = \sum^{2^b} B(j + \alpha) \times C(k + \alpha)\} \quad ...(9)$$

To obtain a single data element, $2^b$ multiplications and $(2^b -1)$ additions are required if the interpolation is performed in a software manner, or $2^b$ accesses are required in a multiplier accumulator, for example, if the interpolation is performed in a hardware manner. A floating point processor or the like is generally employed to perform fast operation in a software manner, whereas several seconds to several tens of seconds are required for single operation (addition, multiplication etc.) even if the same is employed. On the other hand, the access time of a multiplier accumulator is extremely fast, eg., several tens of nanoseconds (nsec).

Consider, for example, a three-dimensional table having 4-bit addresses per dimension, to compare times required for obtaining data by three methods of:

(A) obtaining all look-up table data by calculation;

(B) obtaining basic look-up table data by calculation and performing interpolation in a software manner; and

(C) obtaining basic look-up table data by calculation and performing interpolation in a hardware manner.

The number of data elements is $(2^4)^3 = 4096$ from the expression (8a). The number of basic data elements is $(2^1 + 1)^3 = 27$ or $(2^2 + 1)^3 = 125$ or $(2^3 + 1)^3 = 729$ from the expression (8b), and it is assumed to be 125 since errors are increased when the number of basic data elements is excessively small. Further, the processing time per data element in the host computer 7 is assumed to be 1 msec. and the interpolation time per data element is assumed to be 400 $\mu$sec in software and 0.4 $\mu$sec in hardware.

(A) In the case of calculating all data:

1 msec. x 4096 = 4.1 sec.

(B) In the case of software interpolation:

1 msec. x 125 + 400 $\mu$sec. x 4096 = 1.8 sec.

(C) In the case of hardware interpolation:

1 msec. x 125 + 0.4 $\mu$sec. x 4096 = 0.13 sec.

It is clear therefore that hardware interpolation is extremely fast as compared with the other possibilities, and this becomes even more pronounced as the calculation time per data element and the number of data elements are increased. No consideration is given to the time required for data transfer from the host computer 7 to the look-up table 1 and the basic memory table 9 in the above approximate calculation of processing time, since the transfer time is generally extremely fast, e.g. several $\mu$sec. per data element, and the number of transferred data elements is small particularly in the case of interpolation.

## (E) Practicability

On the assumption that the look-up table 1 is a table having a b-dimensional address space with a-bit addresses per dimension and the basic memory table 9 is a table having a b-dimensional address space with c-bit addresses per dimension, comparison is made on practicability with respect to:

(A) a method simply incrementing the address of each table 1 by 1:

(B) a method of minimizing the basic and coefficient memory tables 9 and 11 in storage capacity; and

(C) a method in accordance with the aforementioned embodiment of the present invention.

In the method (A), an address generator may be in the form of a binary counter of a x b x $2^b$ bit output, whereas the basic and coefficient memory tables 9 and 11 respectively require $(2^a)$ x $^b$ in capacity. the capacity being $2^b$ times that of the look-up table 1, and hence this method is not practical.

In the method (B), the basic and coefficient memory tables 9 and 11 may be extremely compact in capacity being $(2^c + 1)^b$ and $(2^{a-c})^b$ respectively, whereas the address generator is extremely complicated and hence this method also is not practical.

In the method (C). the address generator may take the form of a binary counter of a x b x $2^b$ bit output similarly to the method (A). and the basic and coefficient memory tables 9 and 11 are also very compact in capacity being $(2^c)^b$ x $2^b$ and $(2^{a-c})^b$ x $2^b$ respectively, and hence this method is highly practical.

## (F) Example of Modified Employment

In the aforementioned embodiments, results of colour compensation operation etc. on all input image data are obtained from the look-up table.

However, the capacity of the look-up table becomes too large in practice. since $2^{8 \times 3}$ table addresses are necessary when eight bits are required for each one of red (R), green (G) and blue (B) colour signals.

In order to overcome this, a well-known interpolation method may be utilised, wherein a look-up table is formed for selected discrete input image data and data read from this table is interpolated to obtain all of the results of colour compensation etc. In this case, data generated by the method of the present invention is written in the look-up table of the conventional interpolation system to be read from this look-up table and subjected to the further conventional interpolation operation so that the results of the colour correction operation etc can be obtained, with respect to $2^{8 \times 3}$ addresses, for three colour signals without the storage capacity of the look-up table being too large.

According to the present invention as hereinabove described. data to be written in a look-up table can be quickly and efficiently generated by adding a simple circuit, whereby colours of an output image displayed on a colour monitor can be changed substantially in real time when an operator changes an image processing condition in an electronic process scanner.

The features disclosed in the foregoing description. in the following claims and/or in the accompanying drawings may, both separately and in any combination thereof, be material for realising the invention in diverse forms thereof.

## Claims

1. A method of generating look-up table data, comprising the steps of: calculating and storing basic data elements selected at prescribed intervals from data to be written in a look-up table; storing coefficient data elements required for linearly interpolating said basic data: performing an interpolation operation in an interpolation computing element by reading said basic data elements and correlated coefficient data elements and deriving said interpolated look-up data elements; and sequentially writing data obtained by said interpolation operation in said look-up table.

2. A method according to claim 1, wherein said look-up table has a b-dimensional address space with a-bit addresses per dimension, said basic data elements are stored in a basic memory table having a b-dimensional address space with c-bit addresses per dimension, the number of said basic data elements is $2^c + 1$ per dimension and is $(2^c + 1)^b$ in total in b dimensions, a set of said basic data elements are formed by $2^b$ of the basic data which mutually adjoin in each dimension, and said basic data elements are packed as $2^b$ x $(2^c)^b$ data with respect to $(2^c)^b$ sets for storage in said basic memory table under assignment of different addresses, and each set of basic data elements is interpolated to become $(2^{a-c})^b$ data interpolated elements in order to obtain $(2^c)^b$ x $(2^{a-c})^b = (2^a)^b$ look-up table data elements in total.

3. A method according to claim 2. wherein a set of said coefficient data elemnts is formed by $2^b$ of the coefficient data elemnts which are required for calculation of a single interpolated data elemnt, and said coefficient data elements are packed as $2^b \times (2^{a-c})^b$ data elements with respect to $(2^{a-c})^b$ sets which are equal in number to the interpolated data elements derived from a set of said basic data elements for storage in said coefficient memory table under assignment of different addresses.

4. A method according to claim 3. wherein read addresses are designated so that each set of said basic data elements is read respeatedly $(2^{a-c})^b$ times and different sets of said coefficient data elements are correspondingly read for respective ones of said repeated sets and different write addresses are designated for every reading of a set of said basic and coefficient data elements. in reading of said basic and coefficient data elements and writing of the obtained data elements in said look-up table.

5. An apparatus for generating look-up table data, comprising: a computer for calculating basic data elements selected at prescribed intervals from data to be written in a look-up table: a basic memory table for storing said basic data elements at previously assigned addresses: a coefficient memory table for storing coefficient data elements required for linearly interpolating said basic data at previously assigned addresses: an address generator for generating read addresses for said basic and coefficient memory tables and correlated write addresses of said look-up table and an interpolation computing element for receiving said basic and coefficient data elements read at said read addresses to perform an interpolation operation to derive interpolated look-up table data elements. data obtained by said interpolation operation being written in said look-up table in accordance with said write addresses.

6. An apparatus according to claim 5. wherein said look-up table is a table having a b-dimensional address space with a-bit addresses per dimension. said basic memory table is a table having a b-dimensional address space with c-bit addresses per dimension. the number of said basic data elements is $2^c + 1$ per dimension and is $(2^c + 1)^b$ in total in b dimensions. a set of said basic data is formed by $2^b$ of the basic data elements which mutually adjoin in each dimension. said basic data are packed as $2^b \times (2^c)^b$ data with respect to $(2^c)^b$ sets for storage in said basic memory table under assignment of different addresses. and each set of basic data elements is interpolated to become $(2^{a-c})^b$ interpolated data elements in order to obtain $(2^c)^b \times (2^{a-c})^b = (2^a)^b$ look-up table data elements in total.

7. An apparatus according to claim 6. wherein a set of said coefficient data elements is formed by $2^b$ of the coefficient data elements which are required for calculation of a single interpolated data element, and said coefficient data elements are packed as $2^b \times (2^{a-c})^b$ data with respect to $(2^{a-c})^b$ sets which are equal in number to the interpolated data elements derived from a set of said basic data elements, for storage in said coefficient memory table under assignment of different addresses.

8. An apparatus according to claim 7. wherein the designation of read addresses is performed so that a set of said basic data elements is read repeatedly $(2^{a-c})^b$ times and different sets of said coefficient data elements are correspondingly read for respective ones of said repeated sets. and designation of different write addresses is performed for every designation of read addresses of a set of said basic and coefficient data elements. in generation of read addresses of said basic and coefficient memory tables and write addresses of said look-up table by said address generator.

9. An apparatus according to claim 8, wherein said address generator comprises a binary counter having a prescribed number of digits and arranged to perform the required address designation by prescribed combination of its digit outputs.

10. An apparatus according to claim 9, wherein said interpolation computing element comprises a multiplier/accumulator, and a control signal is supplied by said binary counter so that the accumulated content of the multiplier/accumulator is cleared for each designation of read addresses of a set of said basic and coefficient data elements.

## FIG. 1

## FIG. 2

| ADDRESS | DATA |
|---------|---------|
| 0 | D(0) |
| 1 | D(4) |
| 2 | D(4) |
| 3 | D(8) |
| 4 | D(8) |
| 5 | D(12) |
| 6 | D(12) |
| 7 | D(16) |

## FIG. 3

| ADDRESS | DATA |
|---------|------|
| 0 | 4/4 |
| 1 | 0/4 |
| 2 | 3/4 |
| 3 | 1/4 |
| 4 | 2/4 |
| 5 | 2/4 |
| 6 | 1/4 |
| 7 | 3/4 |

# FIG.4

(A) READ ADDRESS OF BASIC MEMORY TABLE 9 : 0 1 0 1 0 1 0 1 2 3 2 3 — 6 7 6 7

(B) OUTPUT DATA OF BASIC MEMORY TABLE 9 : D(0) D(4) D(0) D(4) D(0) D(4) D(0) D(4) D(4) D(8) D(4) D(8) — D(12) D(16) D(12) D(16)

(C) READ ADDRESS OF COEFFICIENT MEMORY TABLE 11 : 0 1 2 3 4 5 6 7 0 1 2 3 — 4 5 6 7

(D) OUTPUT DATA OF COEFFICIENT MEMORY TABLE 11 : 4/4 0/4 3/4 1/4 2/4 2/4 1/4 3/4 4/4 0/4 3/4 1/4 — 2/4 2/4 1/4 3/4

(E) OUTPUT DATA OF MULTIPLIER/ACCUMULATOR 8 : D(0) D(1) D(2) D(3) D(4) — D(13) D(14)

$t_1$  $t_2$  $t_3$

FIG.6

# FIG.5

CLK

12

A₀
A₁ → ADDRESS OF COEFFICIENT MEMORY TABLE 11
A₂
A₃
A₄ → ADDRESS OF BASIC MEMORY TABLE 9

# FIG.7

BK₆₄

y

(0,16,0)

z

(0,0,16)

(x,y,z)=(0,0,0)          (16,0,0)          X

BK₁   BK₂

# FIG.8

G        H
C        D
I
E        F
r   q
A   B
p

FIG. 9

0 272 655

| | | $t_1$ | $t_2$ | $t_3$ | $t_4$ | $t_5$ | $t_6$ | $t_7$ | $t_8$ | $t_9$ |
|---|---|---|---|---|---|---|---|---|---|---|

(A) CLOCK INPUT OF BINARY COUNTER 13

(B) OUTPUT OF BINARY COUNTER 13 — $8i-1$ | $8i$ | $8i+1$ | $8i+2$ | $8i+3$ | $8i+4$ | $8i+5$ | $8i+6$ | $8i+7$ | $8i+8$

(C) READ ADDRESS OF BASIC MEMORY TABLE 9 — $j+7$ | $j$ | $j+1$ | $j+2$ | $j+3$ | $j+4$ | $j+5$ | $j+6$ | $j+7$ | $j$

(D) OUTPUT OF BASIC MEMORY TABLE 9 — $B(j+7)$ | $B(j)$ | $B(j+1)$ | $B(j+2)$ | $B(j+3)$ | $B(j+4)$ | $B(j+5)$ | $B(j+6)$ | $B(j+7)$ | $B(j)$

(E) READ ADDRESS OF COEFFICIENT MEMORY TABLE 11 — $k-1$ | $k$ | $k+1$ | $k+2$ | $k+3$ | $k+4$ | $k+5$ | $k+6$ | $k+7$ | $k+8$

(F) OUTPUT OF COEFFICIENT MEMORY TABLE 11 — $C(k-1)$ | $C(k)$ | $C(k+1)$ | $C(k+2)$ | $C(k+3)$ | $C(k+4)$ | $C(k+5)$ | $C(k+6)$ | $C(k+7)$ | $C(k+8)$

(G) Acc INPUT OF MULTIPLIER/ACCUMULATOR 8

(H) CLOCK INPUT OF MULTIPLIER/ACCUMULATOR 8

(I) OUTPUT OF MULTIPLIER/ACCUMULATOR 8 — $L(i-1)$ ... $L(i)$

(J) CLOCK INPUT OF DATA LATCH 15

(K) INPUT DATA OF LOOK-UP TABLE 1 — $L(i-2)$ | $L(i-1)$

(L) $\overline{WE}$ INPUT OF LOOK-UP TABLE 1

(M) INPUT DATA OF ADDRESS LATCH 16 — $i-1$ | $i$ | $i+1$

(N) CLOCK INPUT OF ADDRESS LATCH 16

(O) WRITE ADDRESS OF LOOK-UP TABLE 1 — $i-1$ | $i$